# EUROPÄISCHE PATENTANMELDUNG

(11) **EP 1 302 274 A2**
(43) Veröffentlichungstag der Anmeldung: **16.04.2003**
(21) Anmeldenummer: 02016378.8
(22) Anmeldetag: 25.07.2002
(51) Int. Cl.: B23P 11/00, B23P 15/00, B21H 5/02, F16D 1/08

(54) **Verfahren zur Herstellung eines Verbundteiles**

(30) Priorität: 11.10.2001 DE 10150308
(71) Anmelder: Leico GmbH & Co. Werkzeugmaschinenbau, 59229 Ahlen (DE)
(72) Erfinder: Rolf, Bernhard, 33428 Harsewinkel (DE)
(74) Vertreter: Wunderlich, Rainer, Dipl.-Ing.

(57) **Zusammenfassung**

Die Erfindung betrifft ein Verfahren zum Herstellen eines Verbundteiles (10) aus zumindest einer Büchse (12) und einer Scheibe (14). Am Außenumfang (16) der Büchse (12) wird eine Außenverzahnung (18) spannlos eingeformt, wobei gleichzeitig die Büchse (12) radial aufgeweitet wird. An einem Loch (22) der Scheibe (14) wird eine Innenverzahnung (20) ausgebildet, welche um einen Betrag x kleiner als die Außenverzahnung (18) der Büchse (12) ist. Die Scheibe (14) wird mit ihrer Innenverzahnung (20) auf die Außenverzahnung (18) der Büchse (12) axial aufgepresst, wobei sich die Büchse (12) um den Betrag x definiert radial verengt. Hierdurch wird eine einfache und auch unter hohen Beanspruchungen stabile Verbindung zwischen den beiden Teilen erreicht.

## Beschreibung

Die Erfindung betrifft ein Verfahren zum Herstellen eines Verbundteiles aus zumindest einer Büchse und einer Scheibe. Weiterhin betrifft die Erfindung ein solches Verbundteil gemäß dem Oberbegriff des Anspruchs 15.

Derartige Verbundteile, welche aus einer Scheibe und einer als Nabe daran angebrachten Büchse bestehen, werden in vielfältiger Weise eingesetzt, insbesondere in der Kraftfahrzeugtechnik. Scheiben mit büchsenförmigen Naben kommen beispielsweise bei Getrieben, Kupplungen und anderen Komponenten zum Einsatz, bei welchen eine Scheibe auf einer Welle oder Achse gelagert werden muss.

Für bestimmte Fälle ist es gewünscht, die Scheibe und die Nabenbüchse separat zu fertigen und anschließend miteinander zu verbinden. Dies kann etwa dann sinnvoll sein, wenn die Büchse als eine Gleitbüchse aus einem dafür geeigneten Material gefertigt werden muss, während die Scheibe etwa aus einem verschleißfesten Material sein soll.

Es ist bekannt, derartige Verbundteile durch Schweißen herzustellen. Allerdings ist das Schweißen nur auf bestimmte Materialkombinationen anwendbar. Zudem kann das Schweißen zu erheblichen thermischen Spannungen und damit zu Verzug in dem Werkstückgefüge führen. Bei einer hohen Maßhaltigkeit ist es daher erforderlich, Schweißteile einer aufwändigen Nachbearbeitung zu unterziehen.

Weiter ist es bekannt, die Scheibe auf der Büchse durch lösbare Befestigungsmittel, beispielsweise Wellenmuttern oder Sprengringe zu befestigen. Diese Befestigungsmittel sind ebenfalls aufwändig, da sie einer spanabhebenden Bearbeitung zum Einbringen eines Gewindes bzw. zum Einbringen einer Nut bedürfen. Zudem besteht die Gefahr bei dynamischen Wechselbeanspruchungen, dass sich derartige Befestigungsmittel über einen längeren Zeitraum lockern und lösen.

Der Erfindung liegt die **Aufgabe** zugrunde, ein Verbundteil sowie ein Verfahren zum Herstellen eines Verbundteiles anzugeben, welches einerseits besonders stabil und andererseits einfach und zugleich formgenau herstellbar ist.

Hinsichtlich der Herstellung des Verbundteiles wird die Aufgabe durch ein Verfahren mit den Merkmalen des Anspruchs 1 gelöst. Der weitere Teil der Aufgabe wird durch ein Verbundteil mit den Merkmalen des Anspruchs 15 gelöst. Ausgestaltungen der Erfindung sind in den jeweils abhängigen Ansprüchen angegeben.

Das erfindungsgemäße Verfahren zum Herstellen eines Verbundteiles aus zumindest einer Büchse und einer Scheibe ist dadurch gekennzeichnet, dass am Außenumfang der Büchse eine Außenverzahnung spanlos eingeformt und gleichzeitig dabei die Büchse radial aufgeweitet wird, dass ein Loch in der Scheibe mit einer Innenverzahnung ausgebildet wird, welche um einen definierten Betrag x kleiner als die Außenverzahnung der Büchse ist, und dass die Scheibe mit ihrer Innenverzahnung auf der Außenverzahnung der Büchse axial aufgepresst wird und dabei die Büchse definiert radial verengt wird. Vorzugsweise entspricht die definierte radiale Verengung dem definierten Betrag x.

Ein Grundgedanke der Erfindung liegt darin, in den Außenumfang einer hülsenförmigen Büchse derart eine Außenverzahnung spannlos einzuformen, dass die Büchse dabei radial aufgeweitet wird. Auf diese Außenverzahnung wird dann die gelochte Scheibe mit einer entsprechenden Innenverzahnung derart aufgebracht, dass die zunächst radial aufgeweitete Büchse wieder definiert radial verengt wird. Hierdurch wird zum einen erreicht, dass die Scheibe mit einer radialen Vorspannung an der Scheibe befestigt ist. Somit können mechanische oder thermische Wechselbeanspruchungen an der Scheibe, welche zu einer Aufweitung der Scheibe führen, aufgefangen und kompensiert werden. Es ist so auch unter extremen Betriebsbedingungen des Verbundteiles eine zuverlässige drehfeste, spielfreie Verbindung zwischen der Scheibe und der Büchse sichergestellt. Das radiale Aufweiten und das anschließende radiale Verengen trägt maßgeblich zu dieser hervorragenden Vorspannung der Fügeverbindung bei.

Zum anderen sind sowohl das radiale Aufweiten als auch das radiale Verengen durch Aufpressen der Scheibe fertigungstechnisch sehr gut reproduzierbar. Durch das abschließende Aufpressen der gelochten Scheibe mit Innenverzahnung kann mit hoher Maßhaltigkeit der Innendurchmesser der Büchse eingestellt werden. Dies ist gerade dann vorteilhaft, wenn die Büchse zur Verbindung mit einer Welle oder Achse vorgesehen ist.

Nach der Erfindung ist es besonders vorteilhaft, dass die Büchse beim Einformen der Außenverzahnung um den definierten Betrag x aufgeweitet wird. Der Betrag der Aufweitung entspricht damit dem Betrag, um welchen beim axialen Aufpressen der Scheibe die Büchse radial verengt wird. Die Büchse kann daher von vornherein mit den Maßen gefertigt werden, welche auch das Endmaß der Büchse in dem Verbundbauteil sind.

Weiter ist es erfindungsgemäß, dass an der Innenseite der Büchse ein Innenprofil ausgebildet, insbesondere spannlos eingeformt wird. Hierdurch kann die Formenvielfalt und der Einsatzzweck des Verbundteiles erweitert werden.

Bevorzugt ist es dabei, dass das Innenprofil der Büchse als ein Vielkeilwellenprofil oder eine andere Verzahnung ausgeformt wird. Insbesondere ein Vielkeilwellenprofil ist für eine drehfeste Verbindung der Büchse mit einer Welle oder Achse geeignet.

Eine sehr gute Reproduzierbarkeit der Aufweitung der Büchse wird erfindungsgemäß dadurch erreicht, dass die Außenverzahnung der Büchse als eine Kerbverzahnung eingeformt wird. Die Kerbverzahnung hat den weiteren Vorteil, dass aufgrund der relativ geringen Zahnhöhe bei einem Fertigen der Innenverzahnung der Scheibe nur wenig Material abgetragen werden muss.

Zum Erreichen einer besonders hohen Maßhaltigkeit beim Vorsehen eines Innenprofiles an der Büchse ist es erfindungsgemäß, dass die Zähnezahl der Außenverzahnung der Büchse mindestens doppelt so groß ist wie die Zähnezahl der Verzahnung des Innenprofiles der Büchse.

Der Einsatzzweck des herzustellenden Verbundbauteiles wird erfindungsgemäß dadurch verbessert, dass zum leichteren Auffädeln der Büchse auf eine Achse oder Welle die Zähne des Innenprofiles der Büchse stirnseitig mit einer Anschrägung ausgebildet werden.

Zur Vereinfachung des Fügevorganges Scheibe/Büchse ist es erfindungsgemäß, dass die Zähne der Außenverzahnung der Büchse beim Einrollen angeschrägt werden.

Für die Herstellung des Innenprofiles ist es aus fertigungstechnischer Sicht vorteilhaft, dass das Innenprofil der Büchse nach einem Vorlauf-Drückwalzverfahren oder einem Gegenlauf-Drückwalzverfahren hergestellt wird. Diese Drückwalzverfahren können auf derselben Maschine und in derselben Einspannung wie das Einrollen der Außenverzahnung durchgeführt werden, was eine weitere Vereinfachung und Kostenreduzierung bedeutet.

Eine weitere Verbesserung wird nach der Erfindung dadurch erreicht, dass für das Gegenlauf-Drückwalzverfahren eine rohrförmige Vorform ohne Axialanschlag verwendet wird und dass für das Vorlauf-Drückwalzverfahren ein erforderlicher Anschlag in einer ersten Umformoperation in derselben Aufspannung angeformt wird, in der auch der Drückwalzvorgang zum Anformen des Innenprofiles erfolgt.

Nach der Erfindung ist es besonders wirtschaftlich, dass das Innenprofil und die Außenverzahnung der Büchse in einer Aufspannung geformt werden.

Zudem ist es erfindungsgemäß, dass die Außenverzahnung durch Einrollen mit einem entsprechend verzahnten Werkzeug mit radialer Zustellung erfolgt, so dass die Stirnseiten der eingeprägten Zahnlücken einen einseitigen, formschlüssigen Anschlag für die Scheibe bilden. Das verzahnte Werkzeug hat dabei radial verlaufende Flanken, so dass der einseitige Anschlag für die Scheibe zwischen den anzuformenden Zähnen eine radial verlaufende Anschlagsfläche bildet. Gegen diese Anschlagsfläche kann die Scheibe axial gespannt werden.

Mit der Erfindung ist es weiter vorgesehen, dass durch Drückwalzen ein Innenprofil erzeugt wird, dessen Maße dem gefordeten Endprofil entsprechen und dass beim anschließenden Anformen der Außenverzahnung eine Aufweitung erzeugt wird, wodurch sich das Innenprofil um eine Größe δx vergrößert, und dass die Außenverzahnung der Büchse um dieselbe Größe δx größer geformt wird als eine Außenverzahnung, die zur Innenverzahnung der Scheibe ein Null-Spiel besitzt. Es kann so eine definierte radiale Vorspannung der Scheibe auf der Büchse erreicht werden. Insgesamt wird so eine kraft- und formschlüssige Verbindung zwischen Büchse und Scheibe erreicht.

Zur axialen Lagesicherung der mit Presssitz auf die Büchse aufgebrachten Scheibe können herkömmliche Sicherungs- oder Befestigungsmittel, wie Sprengringe oder Wellenmuttern, eingesetzt werden. Eine besonders zuverlässige und zugleich kostengünstig herzustellende Lagesicherung ist nach der Erfindung dadurch möglich, dass zur axialen Fixierung der Scheibe auf der Büchse die Scheibe auf ihrer einen Seite gegen einen ausgebildeten Anschlag gedrückt wird und dass auf der anderen Seite der Scheibe die Außenverzahnung gegen die Scheibe geformt wird. Hierbei kann die Außenverzahnung auf der Büchse durch einen Drückwalzschritt spanlos umgeformt und gegen die Stirnseite der Scheibe gedrückt werden. Die Scheibe wird sozusagen auf der Büchse verstemmt. Es wird so eine kostengünstige und stabile axiale Lagefixierung der Scheibe auf der Büchse ermöglicht.

Ausgehend von einem gattungsgemäßen Verbundteil aus zumindest einer Büchse und einer Scheibe, wobei die Büchse an ihrer Innenseite ein definiertes Innenprofil und an ihrer Außenseite eine Außenverzahnung aufweist, über welche die Scheibe mit einer entsprechenden Innenverzahnung durch Fügen verbunden ist, ist die Erfindung dadurch gekennzeichnet, dass die Scheibe auf die Büchse spielfrei und mit einer radialen Vorspannung gefügt ist, wobei das Innenprofil der Büchse vor dem Fügen mit einem Endmaß ausgebildet ist, in die Büchse eine Außenverzahnung eingeformt und dabei die Büchse einschließlich des Innenprofiles um einen definierten Betrag aufgeweitet ist und die radiale Vorspannung durch axiales Aufpressen der Scheibe eingestellt ist, deren Innenverzahnung um den definierten Betrag x kleiner als die eingeformte Außenverzahnung ausgebildet ist. Mit diesem erfindungsgemäßen Verbundteil können die zuvor beschriebenen Vorteile erreicht werden. Die Scheibe und die Büchse können aus unterschiedlichem Material gefertigt sein. Insbesondere kann die Büchse zum Bilden einer Gleitbüchse aus Bronze oder einem anderen Material mit guten Gleiteigenschaften bestehen.

Die Erfindung wird nachfolgend anhand eines bevorzugten Ausführungsbeispieles weiter erläutert, welches schematisch in den beigefügten Zeichungen dargestellt ist. In den Zeichnungen zeigen:
- Fig. 1: einen teilweisen Längsschnitt durch ein erfindungsgemäßes Verbundteil und
- Fig. 2: einen teilweisen Querschnittansicht des Verbundteiles von Fig. 1.

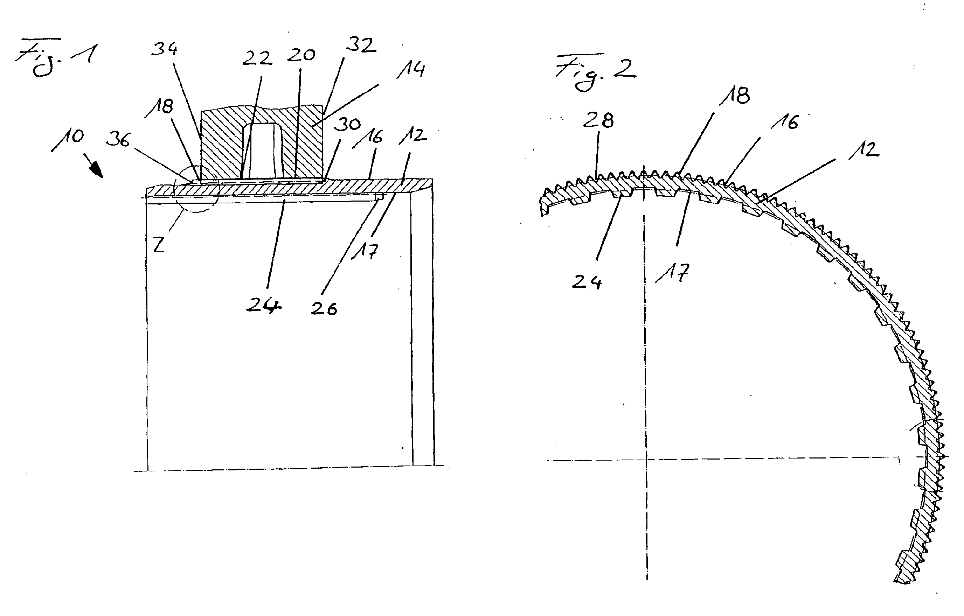

Mit Bezug auf die Figuren 1 und 2 wird der Aufbau und die Herstellung eines erfindungsgemäßen Verbundteiles 10 aus einer Büchse 12 und einer axial aufgepressten Scheibe 14 erläutert. Vor dem Aufpressen der Scheibe 14 wird die Büchse 12 durch Drückwalzen an ihrer Innenseite 17 mit einem Innenprofil 24 versehen. Dieses ist zum Bilden einer drehfesten, aber axial verschiebbaren Verbindung zu einer nicht dargestellten Achse als ein Vielkeilwellenprofil ausgeformt. Die Büchse 12 erhält dabei eine Form, welche bereits dem gewünschten Endmaß der Büchse 12 als Bestandteil des Verbundteiles 10 entspricht.

Anschließend wird an dem Außenumfang 16 der Büchse 12 spanlos eine Außenverzahnung 18 eingerollt. Die Außenverzahnung 18 ist dabei als eine Kerbverzahnung ausgebildet, deren Zähnezahl etwa dem Vierfachen der zahnförmigen Erhebungen des Vielkeilwellenprofiles auf der Innenseite 17 der Büchse 12 entspricht. Die Kerbverzahnung wird dabei auf einer Drückwalzmaschine derart ausgeformt, dass der Außendurchmesser der Büchse 12 um einen definierten Betrag x radial erweitert wird. Das Einformen der Kerbverzahnung sowie das gleichzeitige radiale Erweitern der Büchse 12 ist auf modernen Drückwalzmaschinen derart ausführbar, dass das Maß der radialen Erweiterung mit hoher Präzision reproduzierbar ist.

Die Außenverzahnung 18 wird am Außenumfang 16 der Büchse 12 lediglich an einem Teilbereich ausgeformt, so dass an einem Ende ein axialer Anschlag 30 ausgeformt wird, dessen radial gerichtete Stirnfläche die Zahnlücken 28 in der ausgefomten Außenverzahnung 18 begrenzt. Der dem Anschlag 30 gegenüberliegende Endbereich 36 ist an dem Außenumfang 16 der Büchse 12 derart abgesetzt und radial vorstehend, dass die Scheibe 14 axial bis zu dem Anschlag 30 aufschiebbar ist.

Hierfür weist die Scheibe 14 ein mittleres Loch 22 auf, an dessen Umfang eine Innenverzahnung 20 korrespondierend zu der Außenverzahnung 18 der Büchse 12 ausgebildet ist. Der Innendurchmesser des Loches 22 mit der Innenverzahnung 20 ist um den definierten Betrag x kleiner ausgeformt als die Außenverzahnung 18 der radial erweiterten Büchse 12.

Durch das axiale Aufpressen der Scheibe 14 auf die Außenverzahnung 18 der Büchse 12 wird diese wieder radial auf das Ursprungsmaß um den Betrag x verengt. Das Innenprofil 24 an der Innenseite 17 der Büchse 12 folgt dabei dieser radialen Verengung. Durch das radiale Erweitern und anschließende wieder radiale Verengen um einen definierten Betrag x kann ein Verbundteil 10 mit einem Endmaß mit engen Toleranzen des Innenprofils 24 hergestellt werden. Gleichzeitig erfolgt eine radiale Vorspannung der Scheibe 14 auf der Büchse 12. Selbst eine größere thermische Dehnung der Scheibe 14, welche beispielsweise bei dem Einsatz als eine Bremsscheibe auftreten kann, führt somit nicht zu einer Lockerung der Fügeverbindung, da die radiale Vorspannung durch die erzeugte größere Dehnbarkeit der Büchse 12 einer temperaturbedingten Aufweitung der Scheibe 14 folgen kann.

Zur axialen Lagesicherung der Scheibe 14 auf der Büchse 12 wird die Scheibe 14 mit ihrer Anschlagseite 32 bis zur Anlage an dem Anschlag 30 aufgepresst. Anschließend wird in der Zone Z der Endbereich 36 der Außenverzahnung 18 durch radiales und axiales Zustellen einer nicht dargestellten Drückwalze gegen eine sogenannte Verstemmseite 34 der Scheibe 14 gedrückt. Auf diese Weise kann die Scheibe 14 auch in axialer Richtung form- und/oder kraftschlüssig auf der Büchse 12 fixiert werden. Zum leichteren Aufschieben der Büchse 12, welche als eine Gleithülse aus einem entprechendem gleitfähigen Material gefertigt sein kann, sind Anschrägungen 26 an dem Innenprofil 24 vorgesehen.

## Patentansprüche

1. Verfahren zum Herstellen eines Verbundteiles (10) aus zumindest einer Büchse (12) und einer Scheibe (14),
**dadurch gekennzeichnet,**
- **dass** am Außenumfang (16) der Büchse (12) eine Außenverzahnung (18) spannlos eingeformt und gleichzeitig dabei die Büchse (12) radial aufgeweitet wird,
- **dass** ein Loch (22) in der Scheibe (14) mit einer Innenverzahnung (20) ausgebildet wird, welche um einen Betrag x kleiner als die Außenverzahnung (18) der Büchse (12) ist, und
- **dass** die Scheibe (14) mit ihrer Innenverzahnung (20) auf die Außenverzahnung (18) der Büchse (12) axial aufgepresst wird und dabei die Büchse (12) definiert radial verengt wird.

2. Verfahren nach Anspruch 1,
**dadurch gekennzeichnet,**
**dass** die Büchse (12) beim Einformen der Außenverzahnung (18) um den definierten Betrag x aufgeweitet wird.

3. Verfahren nach Anspruch 1 oder 2,
**dadurch gekennzeichnet,**
**dass** an der Innenseite (17) der Büchse (12) ein Innenprofil (24) ausgebildet, insbesondere spanlos eingeformt wird.

4. Verfahren nach Anspruch 3,
**dadurch gekennzeichnet,**
**dass** das Innenprofil (24) der Büchse (12) als ein Vielkeilwellenprofil oder eine andere Verzahnung ausgeformt wird.

5. Verfahren nach einem der Ansprüche 1 bis 4,
**dadurch gekennzeichnet,**
**dass** die Außenverzahnung (18) der Büchse (12) als eine Kerbverzahnung eingeformt wird.

6. Verfahren nach einem der Ansprüche 3 bis 5,
**dadurch gekennzeichnet,**
**dass** die Zähnezahl der Außenverzahnung (18) der Büchse (12) mindestens doppelt so groß ist wie die Zähnezahl der Verzahnung des Innenprofiles (24) der Büchse (12).

7. Verfahren nach einem der Ansprüche 3 bis 6,
**dadurch gekennzeichnet,**
**dass** zum leichteren Auffädeln der Büchse (12) auf eine Achse oder Welle die Zähne des Innenprofiles (24) der Büchse (12) stirnseitig mit einer Anschrägung (26) ausgebildet werden.

8. Verfahren nach einem der Ansprüche 1 bis 7,
**dadurch gekennzeichnet,**
**dass** die Zähne der Außenverzahnung (18) der Büchse (12) beim Einrollen angeschrägt werden.

9. Verfahren nach einem der Ansprüche 3 bis 8,
**dadurch gekennzeichnet,**
**dass** das Innenprofil (24) der Büchse (12) nach einem Vorlauf-Drückwalzverfahren oder einem Gegenlauf-Drückwalzverfahren hergestellt wird.

10. Verfahren nach Anspruch 9,
**dadurch gekennzeichnet,**
**dass** für das Gegenlauf-Drückwalzverfahren eine rohrförmige Vorform ohne Axialanschlag verwendet wird und dass für das Vorlauf-Drückwalzverfahren ein erforderlicher Anschlag in einer ersten Umformoperation in derselben Aufspannung angeformt wird, in der auch der Drückwalzvorgang für die Anformung des Innenprofiles (24) erfolgt.

11. Verfahren nach einem der Ansprüche 3 bis 10,
**dadurch gekennzeichnet,**
**dass** das Innenprofil (24) und die Außenverzahnung (18) der Büchse (12) in einer Aufspannung geformt werden.

12. Verfahren nach einem der Ansprüche 1 bis 11,
**dadurch gekennzeichnet,**
**dass** die Außenverzahnung (18) durch Einrollen mit einem entsprechend verzahnten Werkzeug mit radialer Zustellung erfolgt, so dass die Stirnseiten der eingeprägten Zahnlücken (28) einen einseitigen, formschlüssigen Anschlag (30) für die Scheibe (14) bilden.

13. Verfahren nach einem der Ansprüche 1 bis 12,
**dadurch gekennzeichnet,**
**dass** durch Drückwalzen ein Innenprofil (24) erzeugt wird, dessen Maße einem gefomten Endprofil entsprechen, dass beim anschließenden Anformen der Außenverzahnung (18) eine Aufweitung erzeugt wird, wodurch sich das Innenprofil (24) um eine Größe δx vergrössert, und dass die Außenverzahnung (18) der Büchse (12) um dieselbe Größe δx größer geformt wird als eine Außenverzahnung, die zu Innenverzahnung (20) der Scheibe (14) Null-Spiel sitzt.

14. Verfahren nach einem der Ansprüche 1 bis 13,
**dadurch gekennzeichnet,**
**dass** zur axialen Fixierung der Scheibe (14) auf der Büchse (12) die Scheibe (14) auf ihrer einen Seite (32) gegen einen ausgebildeten Anschlag (30) gedrückt wird und
**dass** auf der anderen Seite (34) der Scheibe (14) die Außenverzahnung (18) gegen die Scheibe (14) geformt wird.

15. Verbundteil, insbesondere hergestellt nach einem der Ansprüche 1 bis 14, aus zumindest einer Büchse (12) und einer Scheibe (14), wobei die Büchse (12) an ihrer Innenseite (17) ein definiertes Innenprofil (24) und an ihrem Außenumfang (16) eine Außenverzahnung (18) aufweist, über welche die Scheibe (14) mit einer entprechenden Innenverzahnung (20) durch Fügen verbunden ist,
**dadurch gekennzeichnet,**
- **dass** die Scheibe (14) auf die Büchse (12) spielfrei und mit einer radialen Vorspannung gefügt ist, wobei
- das Innenprofil (24) der Büchse (12) vor dem Fügen mit einem Endmaß ausgebildet ist,
- in die Büchse (12) eine Außenverzahnung (18) eingeformt und dabei die Büchse (12) einschließlich des Innesprofiles (24) um einen definierten Betrag x aufgeweitet ist und
- die radiale Vorspannung durch axiales Aufpressen der Scheibe (14) eingestellt ist, deren Innenverzahnung (20) um den definierten Begtrag x kleiner als die eingefomte Außenverzahnung (18) ausgebildet ist.
